# EUROPÄISCHE PATENTANMELDUNG

(11) **EP 2 489 892 A2**
(43) Veröffentlichungstag der Anmeldung: **22.08.2012**
(21) Anmeldenummer: 12155118.8
(22) Anmeldetag: 13.02.2012
(51) Int. Cl.: F16D 3/04

(54) **Flexible Kupplung mit integrierter Messeinrichtung**

(30) Priorität: 15.02.2011 DE 102011004113
(71) Anmelder: Universität Bielefeld, 33615 Bielefeld (DE)
(72) Erfinder: Paskarbeit, Jan, 33602 Bielefeld (DE); Dr. Schneider, Axel, 33615 Bielefeld (DE)
(74) Vertreter: Ostermann, Thomas

(57) **Zusammenfassung**

Die Erfindung betrifft eine flexible Kupplung zur Übertragung einer Drehbewegung zwischen einem Antriebsteil (2) und einem koaxial zu demselben angeordneten Abtriebsteil (7) mit einem fest mit dem Antriebsteil (2) verbundenen ersten Kupplungsteil (4), mit einem mit dem Abtriebsteil (7) fest verbundenen zweiten Kupplungsteil (6) und mit einem das erste Kupplungsteil (4) mit dem zweiten Kupplungsteil (6) koppelnden materialelastischen Verbindungselement (10), wobei dem materialelastischen Verbindungselement (10) eine Messeinrichtung (11,12) zum Messen einer Relativverdrehung zwischen dem ersten Kupplungsteil (4) und dem zweiten Kupplungsteil (6) zugeordnet ist.

## Beschreibung

Die Erfindung betrifft eine flexible Kupplung zur Übertragung einer Drehbewegung zwischen einem Antriebsteil und einem koaxial zu demselben angeordneten Abtriebsteil mit einem fest mit dem Antriebsteil verbundenen ersten Kupplungsteil, mit einem mit dem Abtriebsteil fest verbundenen zweiten Kupplungsteil und mit einem das erste Kupplungsteil mit dem zweiten Kupplungsteil koppelnden materialelastischen Verbindungselement.

Aus der EP 0 317 564 B1 ist eine flexible Kupplung zur Übertragung einer Drehbewegung zwischen einem Antriebsteil und einem Abtriebsteil bekannt, die eine schraubenförmige Federeinrichtung aufweist, damit eine geringfügige Fehlausrichtung zwischen dem Antriebs- und Abtriebsteil ausgeglichen werden kann. Die Federeinrichtung ist als ein einstückiger zylindrischer Hohlkörper ausgebildet, der eine Mehrzahl von eine Spirale bildenden Windungen aufweist. Aus dem Fachbeitrag "On Joint Design with Intrinsic Variable Compliance: Derivation of the DLR QA-Joint", der Autoren Oliver Eiberger, Sami Haddadin, Michael Weis, Alin Albu-Schäffer und Gerd Hirzinger, (Procedings of the IEEE International Conference on Robotics and Automation, Anchorage, Alaska, USA, S. 1687-1694, 2010), sind Kupplungen zur Übertragung von Drehbewegungen für einen Roboterarm bekannt, bei denen Spiralfedern verwendet werden, um Aktoren elastisch einzusetzen. Die Ausführung mit Spiralfedern erfordert einen relativ großen Bauraumbedarf für den Einbau in den Antriebsstrang. Dies liegt darin begründet, dass nur das Spiralfedervolumen zur Erzeugung der elastischen Wirkung zur Verfügung steht, aber ein relativ großer, zusätzlicher Bauraum innerhalb der Kupplung für Aufhängungen, Kulissen und andere mechanische Teile benötigt wird.

Aus der DE 20 2006 020 549 U1 ist eine flexible Kupplung zur Übertragung einer Drehbewegung zwischen einem Antriebsteil und einem koaxial zu demselben angeordneten Abtriebsteil mit einem ersten Kupplungsteil und einem zweiten Kupplungsteil sowie einem zwischen denselben angeordneten elastischen Verbindungselement bekannt. Das elastische Verbindungselement ist als ein metallischer Balg ausgebildet, der über stirnseitige Ringelemente fest mit den entsprechenden Kupplungsteilen verbunden ist. Nachteilig an der bekannten Kupplung ist, dass ein relativ großer Bauraum benötigt wird.

Von der Firma GERWAH sind spielfreie Elastomerkupplungen beispielsweise der Serie ADS bekannt, bei denen zwischen einem klauenartig ausgebildeten ersten Kupplungsteil und einem klauenartig ausgebildeten zweiten Kupplungsteil als materialelastisches Verbindungselement ein thermoplastisches Elastomer vorgesehen ist. Hierdurch ist eine elastische Drehbewegungsübertragung zwischen einem Antriebs- und einem Abtriebsteil gewährleistet.

Aufgabe der vorliegenden Erfindung ist es, eine flexible Kupplung für Antriebe derart weiterzubilden, dass auf einfache Weise und Bauraum sparend die Funktionalität der flexiblen Kupplung erweitert wird.

Zur Lösung der Aufgabe ist die Erfindung in Verbindung mit dem Oberbegriff des Patentanspruchs 1 dadurch gekennzeichnet, dass dem materialelastischen Verbindungselement eine Messeinrichtung zum Messen einer Relativverdrehung zwischen dem ersten Kupplungsteil und dem zweiten Kupplungsteil zugeordnet ist.

Nach der Erfindung ist dem materialelastischen Verbindungselement eine Messeinrichtung zur Bestimmung des relativen Verdrehwinkels zwischen dem ersten Kupplungsteil und dem zweiten Kupplungsteil zugeordnet. Vorteilhaft kann hierdurch der relative Verdrehwinkel gemessen und unter Kenntnis der Materialeigenschaften des materialelastischen Verbindungselements das aktuell an dem Antriebsteil anliegende Drehmoment bestimmt werden. Die erfindungsgemäße Kupplung hat somit innerhalb eines Antriebs eine elastische Wirkung (z.B. für Impedanzregelung, Hybridregelung und für die Erzeugung von hybrider Elastizität bestehend aus realer und geregelter Elastizität), eine Schutzwirkung sowie eine Drehmomentmessfunktion.

Nach einer Weiterbildung der Erfindung ist das materialelastische Verbindungselement mit dem ersten Kupplungsteil und/oder dem zweiten Kupplungsteil stoffschlüssig (z.B. durch Ein- oder Anspritzen oder Kleben oder durch Schweißen oder durch Vulkanisieren) verbunden. Insbesondere, wenn das materialelastische Verbindungselement mit einem der Kupplungsteile stoffschlüssig verbunden ist, kann der Montageaufwand reduziert werden. Weiterhin kann durch die stoffschlüssige Verbindung bei gleichem Verdrehwinkel das übertragbare Drehmoment erhöht werden, da die Finger des materialelastischen Verbindungselements sowohl auf Druck als auch auf Zug belastet werden.

Nach einer bevorzugten Ausführungsform der Erfindung ist der Raum zwischen dem ersten Kupplungsteil und dem zweiten Kupplungsteil vollständig durch das materialelastische Verbindungselement ausgefüllt. Durch die Verwendung eines massiven und elastischen Kunststoffmaterials bei Ausfüllung eines Großteils des Kupplungsbauraums wird ein hoher Miniaturisierungsgrad erreicht, der die Integrierbarkeit fördert. Die Integration einer Messeinrichtung zur Bestimmung des Torsionswinkels erlaubt bei Kenntnis der relevanten Parameter des Kunststoffmaterials eine Bestimmung des Drehmoments.

Nach einer bevorzugten Ausführungsform der Erfindung greifen das erste Kupplungsteil und das zweite Kupplungsteil klauenförmig ineinander, wobei zwischen benachbarten Flügeln des ersten Kupplungsteils und des zweiten Kupplungsteils jeweils ein radialer Finger des materialelastischen Verbindungselements angeordnet ist. Vorteilhaft ergibt sich hierdurch ein kompakter und massiver Kupplungskörper, wobei die Finger des Verbindungselements an entsprechende Flächen der Flügel des ersten Kupplungsteils und/oder des zweiten Kupplungsteils angreifen können.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Figur 1: eine perspektivische Darstellung einer erfindungsgemäßen flexiblen Kupplung,
- Figur 2: eine Explosionsdarstellung der Kupplung und
- Figur 3: zwei Drehwinkel/Drehmomentkennlinien.

Eine flexible Kupplung gemäß der Erfindung kann beispielsweise in einem Servoantrieb für Roboter oder dergleichen eingesetzt werden. Die flexible Kupplung kann zwischen Elektromotor und Getriebe oder zwischen Getriebe und Abtrieb oder im Fall von Direktantrieben zwischen Elektromotor und Abtrieb montiert sein.

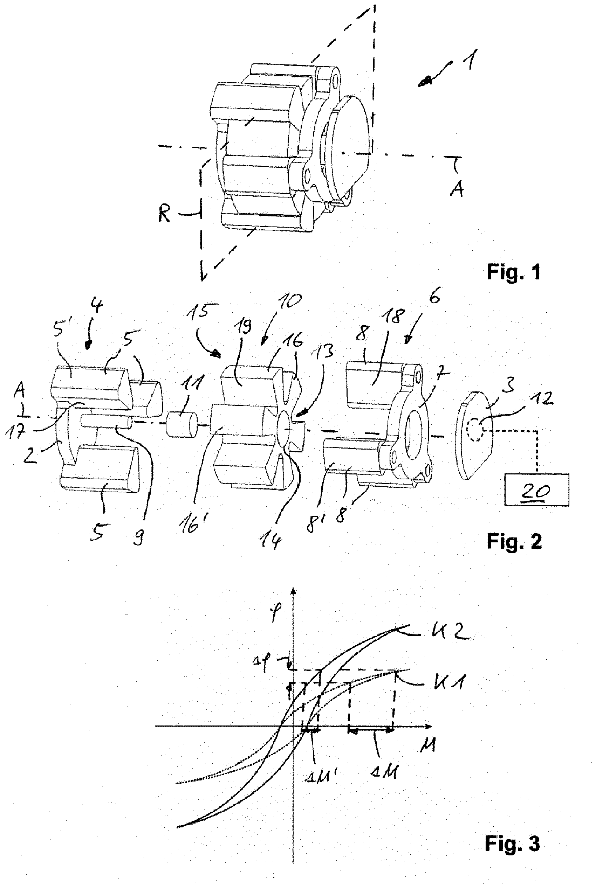

In den Figuren 1 und 2 ist eine flexible Kupplung 1 dargestellt, die auf einer Antriebsseite ein Antriebsteil 2 sowie auf einer Abtriebsseite ein Abtriebsteil 7 aufweist. Das Antriebsteil 2 ist fest mit einer antreibenden Welle (z.B. des Elektromotors oder des Getriebes) und das Abtriebsteil 7 fest mit einer nicht dargestellten Abtriebsvorrichtung verbunden.

Das Antriebsteil 2 ist fest mit einem ersten Kupplungsteil 4 verbunden, das drei in Umfangsrichtung um eine Achse A der flexiblen Kupplung 1 verteilt angeordnete Flügel 5 aufweist. Gegebenenfalls kann das Antriebsteil 2 auch einstückig mit dem ersten Kupplungsteil 4 verbunden sein.

Das Abtriebsteil 7 ist fest mit einem zweiten Kupplungsteil 6 der flexiblen Kupplung 1 verbunden. Gegebenenfalls kann das Abtriebsteil 7 auch einstückig mit dem zweiten Kupplungsteil 6 verbunden sein. Das zweite Kupplungsteil 6 weist, wie das Kupplungsteil 4, drei axial abragende Flügel 8 auf, die - wie die Flügel 5 des ersten Kupplungsteils 4 - um 120° in Umfangsrichtung versetzt zueinander angeordnet sind.

Das Antriebsteil 2 weist einen axialen Haltestift 9 auf, der vor dem Antriebsteil 2 zu der gleichen Seite in axialer Richtung abragt wie die Flügel 5. Der axiale Haltestift 9 dient zur Aufnahme eines Permanentmagneten 11, der zusammen mit einem auf der dem zweiten Kupplungsteil 6 zugewandten Seite der Messeinrichtung 3 angeordneten Drehwinkeldetektor 12 (basierend auf Hall-Sensoren zur Messung der Magnetfeldausrichtung des radial magnetisierten Permanentmagneten 11) eine Messeinrichtung zur Bestimmung eines Relativdrehwinkels zwischen dem ersten Kupplungsteil 4 und dem zweiten Kupplungsteil 6 bildet.

Das materialelastische Verbindungselement 10 ist sternförmig ausgebildet und weist zum einen einen zentralen Abschnitt 13 mit einer Bohrung 14 sowie zum anderen einen äußeren Abschnitt 15 mit einer Anzahl von Fingern 16 auf. Im vorliegenden Ausführungsbeispiel sind sechs in Umfangsrichtung gleich verteilt angeordnete Finger 16 vorgesehen, die in einer Montageposition jeweils einen Raum bzw. einen Kreisringausschnitt zwischen den Flügeln 5 des ersten Kupplungsteils 4 und den Flügeln 8 des zweiten Kupplungsteils 6 ausfüllen. Beispielsweise ist der Finger 16' des Verbindungselements 10 zwischen dem Flügel 5' des ersten Kupplungsteils 4 und dem Flügel 8' des zweiten Kupplungsteils 6 angeordnet. Das Verbindungsteil 10 ist zwischen dem Antriebsteil 2 und dem Abtriebsteil 7 angeordnet.

Im Montagezustand bildet die flexible Kupplung 1 einen kompakten Kupplungskörper, wobei das erste Kupplungsteil 4 und das zweite Kupplungsteil 6 klauenartig ineinander greifen unter Anlage von Seitenflanken 17 des ersten Kupplungsteils 4 sowie Seitenflanken 18 des zweiten Kupplungsteils 6 an Axialflächen 19 der Finger 16. Die Finger 16 des Verbindungselements 10 sowie die Flügel 5, 8 des ersten Kupplungsteils 4 bzw. des zweiten Kupplungsteils 6 sind jeweils keilförmig, das heißt in radialer Richtung nach innen verjüngend ausgebildet, wobei die eine Axialfläche 19 des Fingers 16 unmittelbar an der Seitenflanke 17 des Flügels 5 (erstes Kupplungsteil 4) und die andere Axialfläche 19 desselben Fingers 16 unmittelbar an der Seitenflanke 18 des Flügels 8 (zweites Kupplungsteil 6) anliegt. Hierdurch ist ein kompakter Aufbau der flexiblen Kupplung 1 gewährleistet, wobei sich das erste Kupplungsteil 4, das zweite Kupplungsteil 6 und das materialelastische Verbindungselement 10 im Wesentlichen in einer gemeinsamen Radialebene R erstrecken.

Zur Montage der flexiblen Kupplung 1 wird das materialelastische Verbindungselement 10 in axialer Richtung auf das Antriebsteil 2 aufgesetzt oder aufgesteckt, wobei der Haltestift 9 durch die Bohrung 14 hindurchgreift. Die Finger 16 können mit Spiel oder ohne Spiel oder klemmend oder stoffschlüssig an den Seitenflanken 17 angebracht sein. In einem weiteren Schritt wird das zweite Kupplungsteil 6 auf das erste Kupplungsteil 4 aufgesetzt, wobei die Seitenflanken 18 mit Spiel oder ohne Spiel oder klemmend an den Axialflächen 19 des Verbindungselements 10 zur Anlage kommen. Im letzten Montageschritt wird die Messeinrichtung 3 mit dem Drehwinkeldetektor 12 auf das Abtriebsteil 7 des zweiten Kupplungsteils 6 aufgesteckt, nachdem der Permanentmagnet 11 auf einer Antriebsseite des Haltestiftes 9 vorzugsweise klemmend oder klebend positioniert worden ist.

Nach einer alternativen Ausführungsform der Erfindung kann das materialelastische Verbindungselement 10 auch durch An- bzw. Einspritzen oder durch Kleben oder durch Schweißen oder durch Vulkanisieren stoffschlüssig mit dem ersten Kupplungsteil 4 und/oder dem zweiten Kupplungsteil 6 verbunden sein. Hierdurch könnte der Montageaufwand reduziert werden. Die stoffschlüssige Verbindung erhöht das übertragbare Drehmoment, da die Finger des materialelastischen Verbindungselements sowohl auf Druck als auch auf Zug belastet werden.

Das materialelastische Verbindungselement 10 besteht vorzugsweise aus einem elastischen Kunststoffmaterial (z.B. Elastomer). Das erste Kupplungsteil 4 und das zweite Kupplungsteil 6 bestehen vorzugsweise aus einem Metallmaterial oder einem starren Kunststoffmaterial. Durch die elastische Ausbildung des Verbindungselements 10 ist das erste Kupplungsteil 4 relativ zu dem zweiten Kupplungsteil 6 um einen Drehwinkel ϕ verdrehbar und/oder axial verschiebbar und/oder radial verschiebbar gelagert. Hierdurch können beispielsweise Materialverwindungen innerhalb eines Antriebsstrangs ausgeglichen werden.

In Figur 3 ist eine Drehwinkel/Drehmomentkennlinie K1 für die Kupplung 1 mit einem an den ersten Kupplungsteil 4 und/oder den zweiten Kupplungsteil 6 geklebten materialelastische Verbindungselement 10 sowie eine Kennlinie K2 für die an dem ersten Kupplungsteil 4 und/oder dem zweiten Kupplungsteil 6 ungeklebte Anbindung des materialelastischen Verbindungselements 10 dargestellt. Es ist ersichtlich, dass die Drehmomentauflösung gemäß der Kennlinie K2 wesentlich größer ist als bei der Kennlinie K1. Denn für eine Relativverdrehung Δϕ zwischen dem ersten Kupplungsteil 4 und dem zweiten Kupplungsteil 6 korrespondiert ein Drehmomentbereich ΔM, der größer ist als ein Drehmoment ΔM' bei ungeklebter Ausführung. Weiterhin kann die stoffschlüssige Variante mit der Kennlinie K1 höheren Drehmomentbelastungen in der Kupplung widerstehen, da bei einer Verdrehung Δϕ nicht nur die Hälfte der Anzahl der Finger 16 auf Druck beansprucht werden, sondern zusätzlich die zweite Hälfte der Anzahl aller Finger 16 auf Zug. Somit ist eine Erhöhung des möglichen maximalen Drehmoments zu erwarten.

Der von der Messeinrichtung ermittelte relative Verdrehwinkel ϕ wird in einer Auswerteeinrichtung 20, die mit dem Drehwinkeldetektor 12 (Sensorschaltung) verbunden ist, entsprechend der Kennlinie K1 bzw. K2 ausgewertet, so dass in Abhängigkeit von den Materialeigenschaften des materialelastischen Verbindungselements 10 das an dem Abtriebsteil 7 aktuell anliegende Drehmoment M bestimmbar ist. Dieses Messergebnis kann als Eingangsgröße für eine nicht dargestellte Regelungsschaltung für den Elektromotor dienen, so dass die Genauigkeit der Drehmomenteinstellung einer abtriebsseitig angeordneten (Manipulations- oder Handhabungs-) Einrichtung verbessert werden kann. Eine Fehlausrichtung zwischen dem ersten Kupplungsteil 4 und dem zweiten Kupplungsteil 6 kann nicht nur in radialer oder in Umfangsrichtung, sondern auch in axialer Richtung erfolgen.

Der radialmagnetisierte Permanentmagnet 11 ist starr mit dem Antriebsteil 2 verbunden, während der Drehwinkeldetektor 12 starr mit dem Abtriebsteil 7 verbunden ist. Alternativ kann auch der radialmagnetisierte Permanentmagnet 11 mit dem Abtriebsteil 7 und der Drehwinkeldetektor 12 mit dem Antriebsteil 2 starr verbunden sein.

## Patentansprüche

1. Flexible Kupplung zur Übertragung einer Drehbewegung zwischen einem Antriebsteil und einem koaxial zu demselben angeordneten Abtriebsteil mit einem fest mit dem Antriebsteil verbundenen ersten Kupplungsteil, mit einem mit dem Abtriebsteil fest verbundenen zweiten Kupplungsteil und mit einem das erste Kupplungsteil mit dem zweiten Kupplungsteil koppelnden materialelastischen Verbindungselement, **dadurch gekennzeichnet, dass** dem materialelastischen Verbindungselement (10) eine Messeinrichtung zum Messen einer Relativverdrehung (ϕ) zwischen dem ersten Kupplungsteil (4) und dem zweiten Kupplungsteil (6) zugeordnet ist.

2. Flexible Kupplung nach Anspruch 1, **dadurch gekennzeichnet, dass** die Messeinrichtung zumindest teilweise innerhalb eines durch das Antriebsteil (2) und das Abtriebsteil (7) begrenzten Kupplungskörpers angeordnet ist.

3. Flexible Kupplung nach Anspruch 1 oder 2, **dadurch gekennzeichnet, dass** die Messeinrichtung durch einen starr mit dem Antriebsteil (2) verbundenen radialmagnetisierten Permanentmagneten (11) und durch einen starr mit dem Abtriebsteil (7) verbundenen Drehwinkeldetektor (12) gebildet ist.

4. Flexible Kupplung nach einem der Ansprüche 1 bis 3, **dadurch gekennzeichnet, dass** eine Auswerteeinrichtung (12) mit der Messeinrichtung zusammenwirkt, so dass in Abhängigkeit von dem durch die Messeinrichtung gelieferten Relativdrehwinkel (ϕ) und von den Materialparametern des materialelastischen Verbindungselements (10) ein an dem Abtriebsteil (7) anliegendes aktuelles Drehmoment (M) ermittelbar ist.

5. Flexible Kupplung nach einem der Ansprüche 1 bis 4, **dadurch gekennzeichnet, dass** das materialelastische Verbindungselement (10) aus einem Elastomermaterial besteht.

6. Flexible Kupplung nach einem der Ansprüche 1 bis 5, **dadurch gekennzeichnet, dass** das materialelastische Verbindungselement (10) mit dem ersten Kupplungsteil (4) und/oder dem zweiten Kupplungsteil (6) stoffschlüssig verbunden ist.

7. Flexible Kupplung nach einem der Ansprüche 1 bis 6, **dadurch gekennzeichnet, dass** das materialelastische Verbindungselement (10) mit dem ersten Kupplungsteil (4) und/oder mit dem zweiten Kupplungsteil (6) durch Ein- oder Anspritzen oder durch Kleben oder durch Schweißen oder durch Vulkanisieren verbunden ist.

8. Flexible Kupplung nach einem der Ansprüche 1 bis 7, **dadurch gekennzeichnet, dass** das erste Kupplungsteil (4) und/oder das zweite Kupplungsteil (6) klauenförmig ausgebildet sind, wobei das materialelastische Verbindungselement (10) in einer gemeinsamen Radialebene (R) an das erste Kupplungsteil (4) und/oder das zweite Kupplungsteil (6) angreift.

9. Flexible Kupplung nach einem der Ansprüche 1 bis 8, **dadurch gekennzeichnet, dass** das materialelastische Verbindungselement (10) derart ausgebildet ist, dass das zweite Kupplungsteil (6) relativ zu dem ersten Kupplungsteil (4) verdrehbar und/oder axial verschiebbar und/oder radial verschiebbar ist.

10. Flexible Kupplung nach einem der Ansprüche 1 bis 9, **dadurch gekennzeichnet, dass** das materialelastische Verbindungselement (10) koaxial zu dem ersten Kupplungsteil (4) und dem zweiten Kupplungsteil (6) angeordnet ist, wobei das materialelastische Verbindungselement (10) zwischen dem ersten Kupplungsteil (4) und dem zweiten Kupplungsteil (6) unter Bildung eines Abstandes zu mindestens einem der Kupplungsteile (4, 6) angeordnet ist.

11. Flexible Kupplung nach einem der Ansprüche 1 bis 10, **dadurch gekennzeichnet, dass** das materialelastische Verbindungselement (10) einen fest mit dem zentralen Abschnitt (13) verbundenen äußeren Abschnitt (15) aufweist, der eine Anzahl von radialen Fingern (16, 16') umfasst, die sich jeweils in Umfangsrichtung zwischen einem Flügel (5) des ersten Kupplungsteils (4) und einem Flügel (8) des zweiten Kupplungsteils (6) erstrecken.

12. Flexible Kupplung nach einem der Ansprüche 1 bis 11, **dadurch gekennzeichnet, dass** die radialen Finger (16, 16') des materialelastischen Verbindungselements (10) und die Flügel (5, 8) des ersten Kupplungsteils (4) und des zweiten Kupplungsteils (6) in der gleichen Radialebene (R) verlaufen.

13. Flexible Kupplung nach einem der Ansprüche 1 bis 12, **dadurch gekennzeichnet, dass** das erste Kupplungsteil (4) und/oder das zweite Kupplungsteil (6) und/oder das Antriebsteil (2) und/oder das Abtriebsteil (7) aus einem Metallmaterial oder einem starren Kunststoffmaterial oder einem keramischen Material bestehen.

14. Flexible Kupplung nach einem der Ansprüche 1 bis 13, **dadurch gekennzeichnet, dass** das Abtriebsteil (7) starr mit einer Welle einer Getriebeeinrichtung und das Antriebsteil (2) starr mit einem Rotor eines elektrischen Motors gekoppelt ist.

15. Flexible Kupplung nach einem der Ansprüche 1 bis 14, **dadurch gekennzeichnet, dass** das Abtriebsteil (7) starr mit einer Welle einer Abtriebseinrichtung und das Antriebsteil (2) starr mit einer Getriebeeinrichtung gekoppelt ist.

16. Flexible Kupplung nach einem der Ansprüche 1 bis 15, **dadurch gekennzeichnet, dass** bei der Integration in einen Direktantrieb das Abtriebsteil (7) starr mit einer Welle einer Abtriebseinrichtung und das Antriebsteil (2) starr mit einem Rotor eines elektrischen Motors gekoppelt ist.

17. Verwendung einer flexiblen Kupplung nach einem der Ansprüche 1 bis 16 in einem Antrieb, insbesondere in einem Servoantrieb oder einem Antriebsstrang in der Robotik oder Automatisierungstechnik.
